# EUROPEAN PATENT APPLICATION

(11) **EP 0 716 951 A1**
(43) Date of publication of application: **19.06.1996**
(21) Application number: 95203176.3
(22) Date of filing: 20.11.1995
(51) Int. Cl.: B60N 2/48

(54) **Axially secured element, which is pivotable over a limited angle**

(30) Priority: 15.12.1994 NL 9402128
(71) Applicant: Netherlands Car B.V., NL-6121 RD Born (NL)
(72) Inventor: van Lieshout, Laurentius Antonius Josephus van, NL-5731 JN Mierlo (NL)
(74) Representative: Timmers, Cornelis Herman Johannes

(57) **Abstract**

An assembly for the supporting, rotatably around a shaft over a limited angle, of an axially secured supporting element (10) has a bore hole which receives this shaft. The bore hole (14) contains a longitudinal groove (16a, 16b) running radially and axially coming out in it. The supporting element is locked between a first axial stop (20, 26) co-operating with a first radial end surface (28) thereof and a first stop pin (30) co-operating with a second radial end surface thereof, projecting at an axial distance from the first stop radially from the shaft and fitting into the longitudinal groove. The supporting element (10) on the side of the second end surface supports an end piece (22) with two stop surfaces (38a, 38b) on an arc of a circle at a distance from each other, projecting from the inner surface of the end piece (22), directed towards the second end surface and co-operating for the limitation of the angle of rotation of the element with the first stop pin (30).

## Description

The invention relates to an assembly for the support of an axially secured supporting element, which is rotatably around a shaft over a limited angle and provided with a bore hole which receives this shaft.

In many spheres there is a need for such an assembly, and especially such an assembly which allows for a so-called "blind" assembly of a first part to a second part. More especially the invention is concerned with an application in which the second part supports the shaft, and the first part invisible components of the assembly, in which the coupling of the first part to the second part must be possible by simply putting the components of the assembly on the shaft after which by rotation the securing of the parts with respect to another is guaranteed. Examples thereof are - as will be explained - to be found in the assembly of accessories in motor vehicles.

This aim is achieved in that in the bore hole ends a longitudinal and axial groove, the supporting element is enclosed between a first axial stop co-operating with a first radial end surface thereof, and a first stop pin co-operating with a second radial end surface thereof, projecting at an axial distance from the first stop radially from the shaft and fitting into the longitudinal groove, and the supporting element supports on the side of this second end surface an end piece with two stop surfaces situated on an arc of a circle at a distance from each other, projecting from the inner surface of the end piece, directed towards the second end surface and co-operating with the first stop pin to limit of the angle of rotation of the element.

To complete the assembly, the supporting element simply has to be put on the shaft in the position in which the first stop pin can pass through the longitudinal groove after which by rotation of the supporting element with respect to the shaft the supporting element is locked between the first axial stop and the first stop pin; the end piece is then fitted on the element, whereby the stop surfaces thereon co-operating with the first stop pin limit the possible angle of rotation.

A preferred embodiment of this assembly is such that the supporting element comprises a central body part containing the shaft bore hole with the longitudinal groove with on both sides thereof in an axial direction a receiving space coaxial thereto, surrounded by the outer wall of the supporting element, of which the first receiving space determined by the first radial end surface of the body part and the outer wall of the element, receives a stop disc located against the supporting element, of which the radial end surface facing away from the supporting element co-operates with a second stop pin projecting radially out of the shaft and forming the first axial stop, and the second radial end surface of the body part co-operates with the first stop pin, in such a way that the combination of supporting element and stop disc is locked between the two stop pins, whilst the second receiving space receives the end piece. This embodiment has the advantage that it can be constructed from simply shaped components, for example produced by injection moulding.

The non-rotatability of the end piece in relation to the supporting element is preferably achieved in that in the body part of the supporting element an axial receiving opening is formed to receive the securing cam projecting axially out of the inner surface of the end piece.

The invention is explained by means of the drawing. Therein is:
Fig. 1 an exploded perspective view of a complete assembly in accordance with the invention;
Fig. 2 a longitudinal section through this assembly;
Fig. 3 a view of the end piece thereof in the direction of arrows III-III in Fig. 2;
Fig. 4 a view of the supporting element in the direction of arrows IV-IV in Fig. 2;
Fig. 5 a perspective schematic diagram of a head rest of a vehicle seat fitted with two removable side pieces, each supported by an assembly in accordance with the invention;
Fig. 6 a cross-section through a side piece in accordance with Fig. 5 with the assembly inside it.

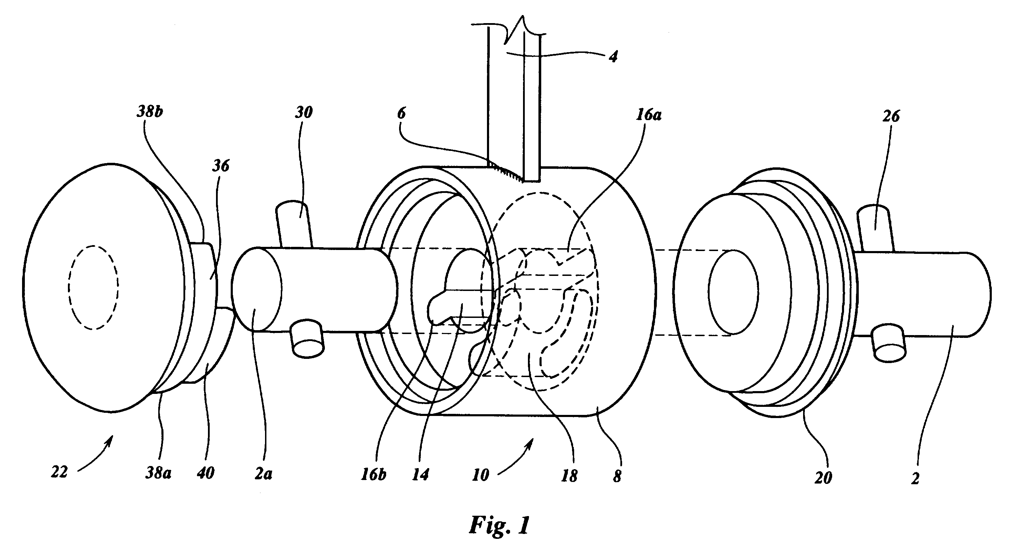

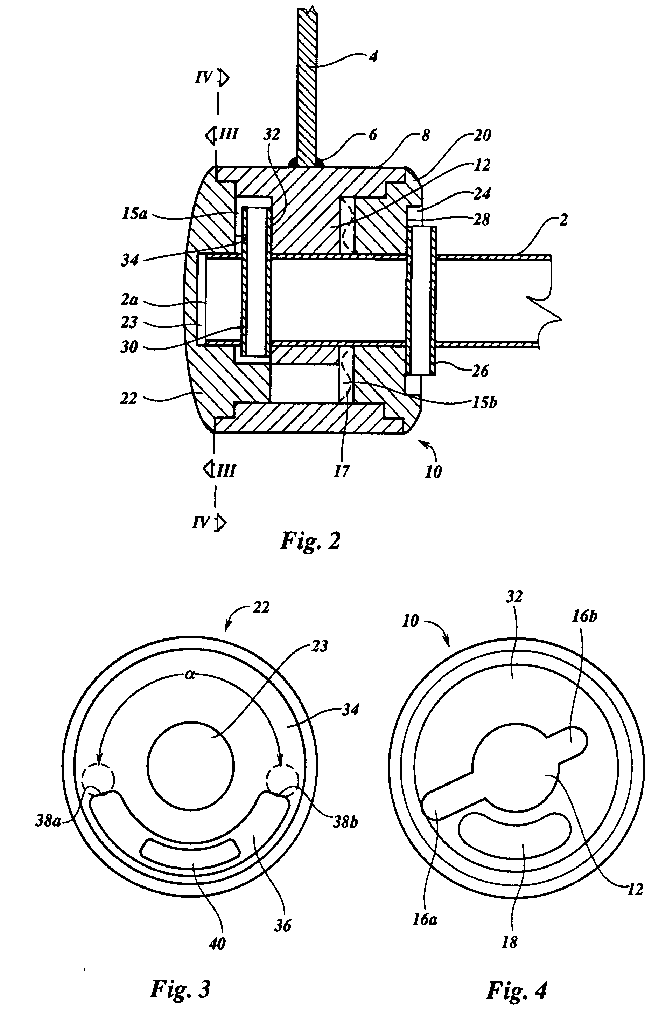

The drawings show a shaft 2 on which by means of an assembly according to the invention, a construction part 4, which will be explained later on in detail, and which must be rotatable over a limited angle and be axially secured, is supported. This construction part 4 is - as shown especially in Figures 1 and 2 - connected via a welding joint 6 to the outer surface 8 of a supporting element 10 that forms part of the assembly in accordance with the invention. This supporting element 10 has a central internally cylindrical body part 12 which has a bore hole 14 in which the shaft 2 can be fittingly received, and two cylindrical receiving spaces 15a, 15b situated on both sides thereof. In the body part 2 a longitudinal groove is formed over the whole axial length of it, coming out in the central bore hole 12 which consists of two parts: the radially comparatively long groove part 16a and the radially somewhat shorter groove part 16b, - in this respect see Fig. 4.

In addition in the body part 12 an axial cavity 18 is formed which in the shown embodiment - in which the element 10 is symmetrical to the central transversal surface - is a continuous cavity. However, as will become clear from what follows, this is not strictly necessary.

The two spaces 15a, 15b of element 10 are sealed: the right-hand space 15b by a stepped stop disc 20 and the left-hand space 15a by an end piece 22, also stepped. The outer surface of stop disc 20 has a cylindrical recess 24 - see especially Fig. 2.

Two stop pins are inserted through the shaft 2, of which the right-hand one, marked 26, in the assembled condition is located against the radial inner surface 28 of the cylindrical recess 24 in the right-hand stop disc 20 and the left-hand one, 30, in the assembled condition is located against the left-hand radial end surface 32 of body part 12. This assembled condition is achieved in that when stop pin 26 is fitted on shaft 2 with pin 26 in contact with disc 20, the stop disc 20 is to be pushed from the left-hand end of the shaft 2a onto the shaft and then the stop pin 30 is to be put in the shaft. This gives a semi-manufactured product that can receive the supporting element 10 by aligning the axial grooves 16a, 16b with the parts of stop pin 30 projecting out of shaft 2 and pushing the supporting element 10 over the shaft until it is located against the stop disc 20 which again finds a stop against the pin 26. The various dimensions and spacings are now chosen in such a way that the body part 12 of supporting element 12, after a small angular rotation, is then axially secured between the stop disc 20 on the one hand and the stop pin 30 on the other which, as stated, collaborates with the radial end surface 32 of the body part 12.

In the space 15b a spring washer 17 - shown in broken lines - can be fitted with which play is taken up and a definite friction is obtained.

Obviously this still does not result into a limitation of the possible angle of rotation of the supporting element 10 around the shaft 2. In this embodiment this limitation is achieved by means of stops on the end piece 22.

This end piece 22, which is a tight fit on the left-hand side of element 10, supports at the end surface 34 thereof, which faces towards the receiving space 15a, an arc-shaped ridge 36 projecting out axially, of which the end surfaces 38a, 38b form stop surfaces for the pin 32 and determine the angle α, over which the element 10 can rotate in relation to shaft 2 - see Fig. 3. It is clear that instead of a continuous ridge 36 two separate cams may also be used, projecting out of the surface 34.

Obviously it is for the final unambigious limitation of the angle of rotation of the supporting element 10 necessary that the end piece 22 cannot rotate in relation to the supporting element 10. In the shown embodiment this is achieved in that a second axial cam 40 projects out of ridge 36, which cam is suitably enclosed in the cavity 18 in the body part 12 of the element 10 - see Figures 3 and 4.

Thus in the assembled condition of the parts both an axial securing of the supporting element and a limitation of its angle of rotation around shaft 2 are obtained.

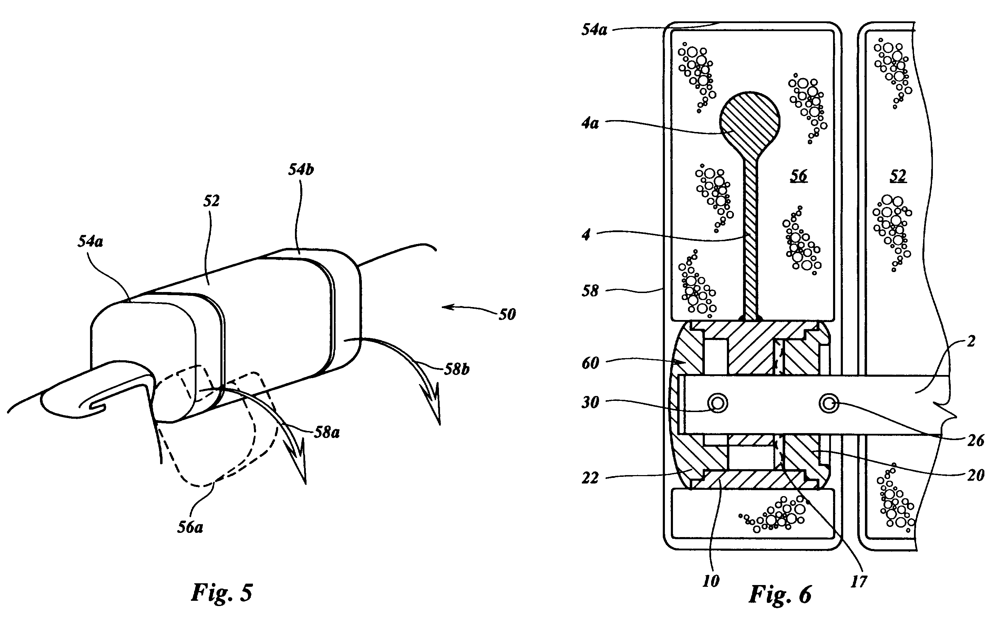

The assembly described above is especially suitable for use in all cases in which a particular construction part has to be coupled rotatably over a limited angle to another construction part while what is called a "blind assembly" is desired. Applications in vehicle manufacturing field are the folding attachment of an armrest, of a console cover, and of headrest side pieces. This last application is explained by means of Figures 5 and 6.

Fig. 5 shows schematically a motor vehicle seat back 50 with a headrest 52 having on both sides sidepieces ("ears") 54a, 54b. As shown in broken lines 56a, with respect to part 54a these can be rotated in the direction of arrows 58a, 58b in relation to the headrest 52. This improves the comfort of the user considerably: he can "support" his head against the ears.

Fig. 6 shows how in this filling 56 of the "ear" 54a already at the manufacturing stage thereof in the foam filling 56 the supporting element 10 with the rod 4 which, to improve the anchoring, has at the end the injection-cast thickening 4a, is embedded. In the space which receives this supporting element 10 the end piece 22 is already inserted and this is completely surrounded by the lining 58. Shaft 2 of the assembly is fixed or, to increase safety, is flexibly anchored in the central headrest part 52. This shaft 2 is already provided with the two pins 26 and 30, and the stop disc 20.

Fitment of the ears on the headrest is very simple and fast: the "ear" is placed in the position in which pin 30 is in line with the longitudinal grooves 16a, 16b and in this position body part 12 can be pushed over the shaft 2 until the position shown in Fig. 2 is reached. Thereafter it is only necessary to rotate back the "ear" 54a with the supporting element 10 locked in it and to press the end piece 22 into the supporting element 10 in such a way that the cam 40 falls into the recess 18 - the parts are then in the correct mutual position and fitment is complete.

The Figures show an embodiment of shaft 2 and end piece 22 in which the shaft 2 with the end 2a is partially received in a central blind hole 23 in the end piece 22 which, although it does leads to better anchoring of end piece 22 with a safe construction and without any outwardly projecting parts, is not strictly necessary.

## Claims

1. Assembly for the support of an axially secured supporting element (10), which is rotatably around a shaft (2) over a limited angle, and provided with a bore hole (14) receiving this shaft (2), characterized in that in this bore (14) ends a longitudinal and radial groove (16a, 16b), the supporting element (10) is enclosed between a first axial stop (20, 26) co-operating with a first radial end surface (28) thereof, and a first stop pin (30) co-operating with a second radial end surface (32) thereof, projecting, at an axial distance from the first stop (20, 26), radially from the shaft and fitting into the longitudinal groove (16a, 16b), and the supporting element (10) supports on the side of this second end surface an end piece (22) with two stop surfaces situated (38a, 38b) on an arc of a circle at a distance from each other, projecting from the inner surface (34) of the end piece, directed towards the second end surface and co-operating with the first stop pin (30) to limit of the angle of rotation of the element (10).

2. Assembly according to claim 1, characterized in that the supporting element (10) comprises a central body part (12) containing the shaft bore hole (14) with the longitudinal groove with on both sides thereof in an axial direction a receiving space (15b, 15a) coaxial thereto, surrounded by the outer wall of the supporting element, of which the first receiving space (15b) determined by the first radial end surface of the body part and the outer wall of the element, receives a stop disc (20) located against the supporting element, of which the radial end surface (28) facing away from the supporting element co-operates with a second stop pin (26) projecting radially out of the shaft and forming the first axial stop, and the second radial end surface (32) of the body part (12) co-operates with the first stop pin (30), both in such a way that the combination of supporting element (10) and stop disc (20) is locked between the two stop pins (30, 26), whilst the second receiving space receives the end piece (22).

3. Assembly according to claims 1-2, characterized in that in the body part (12) of the supporting element (10) an axial receiving opening (48) is formed to receive a securing cam (40) projecting axially out of the inner surface of the end piece.

4. Assembly according to claims 1-3, characterized in that between the first radial end surface of the body part (12) and the radial end surface of the opposite stop disc (20), a spring element (17) acting axially is provided.

5. Headrest assembly of a vehicle seat, characterized by a central part (52) and at least one side part (54a), supported via an assembly in accordance with claims 1-4, located next to it and rotatably over a limited angle connected to the central part.

6. Headrest assembly according to claim 5, characterized in that the shaft (2) of the supporting assembly is flexibly connected to the headrest support.

7. Headrest element according to claims 5-6, characterized in that the supporting element (10) is embedded in the filling (56) of the side element (54a).
